# EUROPÄISCHE PATENTANMELDUNG

(11) **EP 1 085 726 A2**
(43) Veröffentlichungstag der Anmeldung: **21.03.2001**
(21) Anmeldenummer: 00890278.5
(22) Anmeldetag: 12.09.2000
(51) Int. Cl.: H04L 29/06, H04L 9/00

(54) **Anordnung und Verfahren zur verschüsselten Kommunikation**

(30) Priorität: 17.09.1999 AT 159399
(71) Anmelder: Telekom Austria Aktiengesellschaft, 1010 Wien (AT)
(72) Erfinder: Posch, Reinhard, Dr., 8010 Graz (AT)
(74) Vertreter: Wildhack, Helmut, Dr. Dipl.-Ing.

(57) **Zusammenfassung**

Die Erfindung betrifft eine Anordnung zur verschlüsselten Kommunikation zwischen Benutzeranschlüssen (5, 6), nämlich ISDN-*network terminators* (ISDN NT), in ISDN-Netzen, wobei die von dem übertragenden Teilnehmergerät bzw. Benutzeranschluß (5), insbesondere einem ISDN-Basisanschluß (ISDN BA) oder ISDN-Primärratenanschluß (ISDN PRA), mit einer in den zumindest einen B-Kanal und zumindest einen D-Kanal umfassenden Übertragungspfad der Benutzerdaten eingeschalteten Verschlüsselungseinheit (1) verschlüsselt und verschlüsselt an die Vermittlungsstelle (17) oder in das Übertragungsmedium (2), insbesondere Teilnehmeranschlußleitung, aufgegeben und vom Übertragungsmedium (2) bzw. von der Vermittlungseinheit eintreffende Daten entschlüsselt werden. Erfindungsgemäß ist vorgesehen, daß die Verschlüsselungseinheit (1) zwischen der *S/T*-*interface*-Komponente (3) und der *U-transceiver*-Komponente (4) des jeweiligen Benutzeranschlusses (5, 6) implementiert ist bzw. zwischen die Schnittstellen, insbesondere IOM-Schnittstellen, der *S/T-interface*-Komponente (3) und der *U-transceiver*-Komponente (4) eingeschaltet ist.

## Beschreibung

Die Erfindung betrifft eine Anordnung gemäß dem Oberbegriff des Patentanspruches 1 und ein Verfahren gemäß dem Oberbegriff des Anspruches 9.

Ziel der Erfindung ist die Erstellung einer Anordnung bzw. eines Verfahrens zur sicheren Kommunikation in *integrated services digital network* (ISDN)-Netzen, wobei sowohl vertrauliche Kommunikation über Verschlüsselung der Benutzerdaten als auch Teilnehmerauthentikation in der Aufbauphase eines Rufes gewährleistet sind. Es erfolgt dabei eine Einbettung der für Schlüsselaustausch und Verhandlung von Sicherheitsparametern erforderlichen Kommunikationskanäle in das ISDN Protokollmodell. Des weiteren sollen teilnehmerseitige Transparenz, also Unabhängigkeit vom verwendeten ISDN-Endgerät, Servicetransparenz und somit Unabhängigkeit vom verwendeten ISDN-Dienst und netzseitige Transparenz über Unabhängigkeit von der ISDN-Vermittlungsstelle gegeben sein.

Erfindungsgemäß werden diese Ziele bei einer Anordnung der eingangs genannten Art mit den im Kennzeichen des Anspruches 1 angeführten Merkmalen erreicht. Bei einem Verfahren der eingangs genannten Art werden diese Ziele mit den im Kennzeichen des Anspruches 9 angegebenen Merkmalen erreicht.

Erfindungsgemäß wird eine *Security Unit* bzw. Verschlüsselungseinheit als zentrale Systemkomponente in den teilnehmerseitigen Netzwerkabschluß, den ISDN *network terminator* (ISDN NT), integriert. Die Einbettung der Verschlüsselungseinheit erfolgt an der Schnittstelle zwischen jenen Komponenten des ISDN NT, die am Referenzpunkt U der ISDN Referenzarchitektur den leitungsseitigen Netzabschluß und am Referenzpunkt S den teilnehmerseitigen Netzabschluß bilden. Diese Komponenten werden allgemein als *U tranceiver* und *S/T interface* bezeichnet.

Vertrauliche Kommunikation wird über Verschlüsselung der ISDN Benutzerkanäle (B-Kanäle) in der *user plane* des ISDN Protokollmodells erreicht. Die Verhandlung von Sicherheitsparametern bzw. eine Authentikation, wie auch der Schlüsselaustausch sind über Blockieren der B-Kanäle *in band* in die *user plane* des ISDN Protokollmodells eingebunden.

Besondere Vorteile der erfindungsgemäßen Anordnung und des erfindungsgemäßen Verfahrens sind, daß der Aufbau der Anordnung einfach und sicher ist und daß die Verschlüsselungseinheit benutzerseitig nicht umgehbar oder beeinflußbar ist aufgrund des Einbaues bzw. Integration dieser Einheit in den üblicherweise in der Wand oder einem Schaltkasten befindlichen Benutzeranschluß. Die Verschlüsselung erfolgt endgeräteunabhängig; es können Fax-, Computer-, Telefon- oder andere Daten in derselben Weise verschlüsselt übertragen werden. Die Übertragung erfolgt transparent für Sender und Empfänger. Bestehende Benutzeranschlüsse können problemlos nachgerüstet werden.

Bevorzugte Ausführungsformen der Erfindung sind der folgenden Beschreibung, den Zeichnungen und den Patentansprüchen zu entnehmen.

Im folgenden wird die Erfindung anhand der Zeichnung beispielsweise näher erläutert. Es zeigen Fig. 1 Schnittstellen und Referenzpunkte von ISDN-Anschlüssen, Fig. 2 den Aufbau eines ISDN-NT, Fig. 3 eine ISDN-Protokollstruktur, Fig.4 die Integration der Verschlüsselungseinheit in den NT, Fig. 5 ein Blockschaltbild der Verschlüsselungseinheit, Fig. 6 ein Beispiel für einen IOM Interceptor am ISDN BA, Fig. 7 einen endlichen Automaten einer kryptographisch gesicherten Verbindung und Fig. 8 die Vorgangsweise beim Blockieren des B-Kanales.

ISDN wurde als digitales Vermittlungs- und Übertragungsverfahren in den Empfehlungen der I Serie, ITU-T, *Integrated services digital network, Series I Recommendations, International Telecommunication Union, Telecommunication Standardisation Sector,* 1984-1999, durch die *International Telecommunication Union, Telecommunication Standardisation Sector* (ITU-T, vormals CCITT) standardisiert. Im Kontext gegenständlicher Systembeschreibung sind vor allem das Netzkonzept entsprechend der Empfehlungen der 1.300 Serie, ITU-T, *ISDN network concept and functional principles, Series 1.300 Recommendations, International Telecommunication Union, Telecommunication Standardisation Sector,* 1991-1999, sowie die Benutzer-Netz-Schnitstelle der 1.400 Empfehlungen, ITU-T, *ISDN user network interfaces, Series I.400 Recommendations, International Telecommunicatuions Union, Telecommunication Standardisation Sector.* 1984-1999, respektive der Q.900 Empfehlungen, relevant.

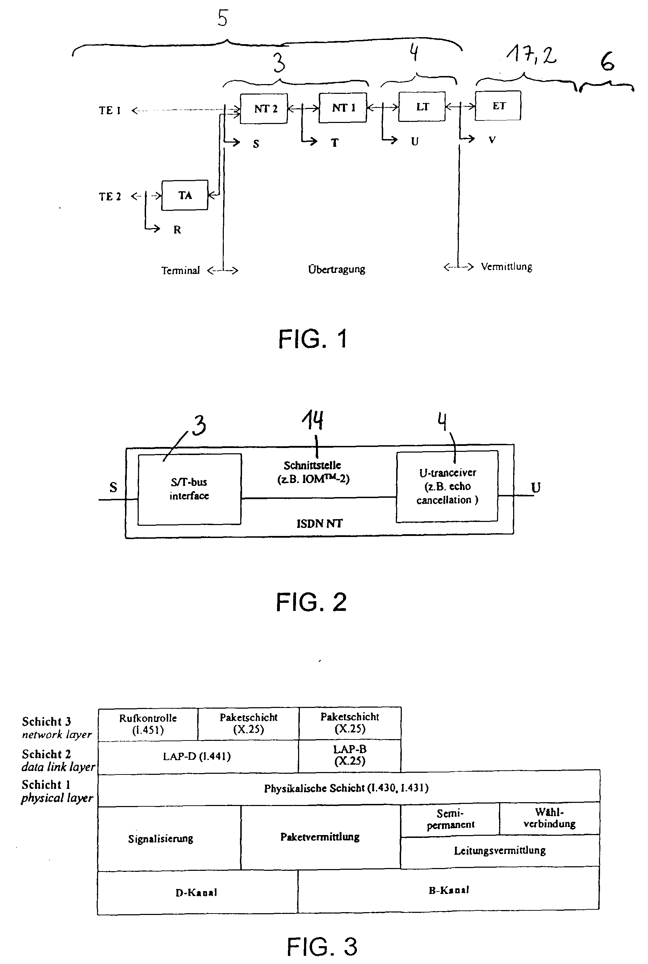

Die Schnittstellen und Referenzpunkte des ISDN gemäß ITU-T Empfehlung 1.320, ITU-T, *ISDN protocol reference model, Recommendation 1.320, International Telecommunication Union, Telecommunication Standardisation Sector,* 1993, sind in Fig. 1 dargestellt. Somit besteht das ISDN Übertragungssystem aus dem vermittlungsseitigen Leitungsabschluß (*line termination* LT) des Benutzeranschlusses der am Referenzpunkt U mit dem teilnehmerseitigen Netzwerkabschluß NT verbunden ist. Der ISDN NT teilt sich in eine Komponente NT1 am Referenzpunkt T und eine Komponente NT2, an dessen Referenzpunkt S ISDN Teilnehmerendgeräte Typus 1 (TE1) direkt, oder Endgeräte Typus 2 (TE2) über Terminaladapter (TA) angebunden sind. Im allgemeinen sind die Komponenten NT1 und NT2 in einer Komponente integriert, respektive sind die optional erweiternden Funktionen des NT2 nicht ausgeführt und werden deshalb in weiterer Folge als NT bezeichnet.

Die in Fig. 1 dargestellten Schnittstellen, Komponenten und Referenzpunkte sind sowohl für den ISDN Basisanschluß (ISDN BA), als auch den ISDN Primärratenanschluß (ISDN PRA) in der gegebenen Form definiert. Auch gelten die nachfolgenden Betrachtungen zu ISDN Kanalverschlüsselung äquivalent für ISDN BA und ISDN PRA.

Es ergeben sich somit mit Referenzpunkt U und Referenzpunkt S zwei Schnittstellen eines ISDN NT. An beiden Schnittstellen können unterschiedliche Konfigurationen oder Ausprägungen ausgeführt sein, wie zum Beispiel Echokompensations- oder Zeitgetrenntlageverfahren samt nationaler Unterschiede der Spezifikation an Referenzpunkt U, oder die Punkt-zu-Punkt versus Punkt-zu-Mehrpunkt in *short passive bus* oder *extended passive bus* Konfiguration des ISDN BA an Referenzpunkt S. In einer typischen Implementierung besteht ein ISDN NT aus einer *U-transceiver*-Komponente 4, die die U-Schnittstellenfunktionen ausführt, zum Beispiel eine Echokompensationsschaltung, und einer *S/T-interface*-Komponente 3 für die Protokolle der NT1, respektive, so in der entsprechenden Konfiguration vorhanden, auch der NT2 Funktionalität.

Fig. 2 zeigt eine derartige Konfiguration für den ISDN BA, wobei die Schnittstelle zwischen der *U-transceiver*-Komponente 4 und der *S/T-interface*-Komponente 3 keinem Referenzpunkt gemäß Fig. 1 direkt zuordenbar und herstellerspezifisch ist, wie zum Beispiel die in der Abbildung angedeutete IOM™-2 Schnittstelle 14. Dabei gelten die in weiterer Folge gegebenen Betrachtungen auch, wenn in sogenannten *single chip* NT die Komponenten *U-transceiver* 3 und *S/T-interface* 4 in einem Baustein integriert sind, sofern diese den Zugriff auf die Übertragungsrahmen ausführen, z.B. als IOM™-2 Schnittstelle.

Das ISDN Protokollmodell teilt sich in eine *user plane* zur Übertragung von Benutzerdaten, sowie eine *control plane* zur Signalisierung, Verbindungskontrolle und Übermittlung der ISDN Zusatzdienste. Dabei werden die Übertragungskanäle leitungsvermittelter, semipermanenter oder permanenter Verbindungen der *user plane* als B-Kanäle bezeichnet, der Übertragungskanal der *control plane* wird D-Kanal genannt. In Fig. 3 ist das ISDN Protokollmodell samt der entsprechenden Empfehlungen der ITU-T I-Serie dargestellt.

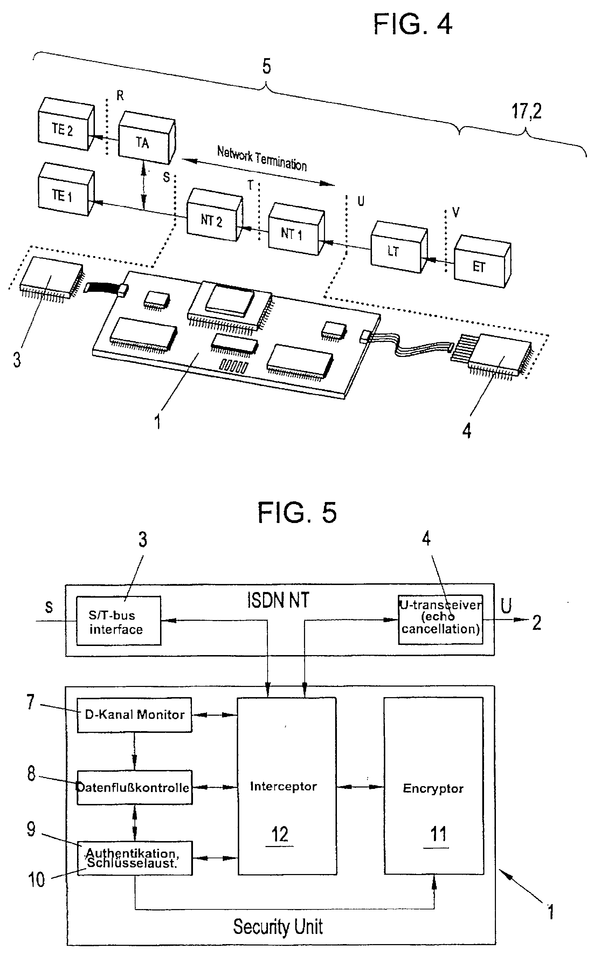

Fig. 4 erläutert die Einbettung der Verschlüsselungseinheit 1 in die Komponenten und Schnittstellen des ISDN Übetragungssystems. Dabei wird die Verschlüsselungseinheit 1 dergestalt in den Übertragungspfad zwischen den Referenzpunkten S bzw. T und U geschaltet, daß die Verschlüsselungseinheit 1 die Schnittstelle zwischen *S/T-interface* Komponente 3 und *U-transceiver* 4 überbrückt. Es resultiert daraus eine Verschlüsselungseinheit 1, deren physikalische Schnittstellen denen eines herkömmlichen NT äquivalent sind, die Daten des D-Kanals und der B-Kanäle jedoch über die Verschlüsselungseinheit 1 geführt werden, somit von dieser überwachbar und modifizierbar sind.

Die in Fig. 4 gezeigte, transparente Einbettung der Verschlüsselungseinheit 1 in den teilnehmerseitigen Netzabschluß NT gilt sowohl für den ISDN BA als auch für den ISDN PRA.

Die Systemkomponenten der Verschlüsselungseinheit 1 sind in Fig. 5 als Blockschaltbild dargestellt. Dabei der Interceptor 12 in Hardware ausgeführt und implementiert die Schnittstelle zwischen den adjazenten Komponenten *U-transceiver* 4 und *S/T-interface* 3. Über den Interceptor 12 ist der Zugriff auf B-Kanal- und D-Kanal-Daten des jeweiligen Übertragungsrahmens gegeben.

Der Encryptor 11 ist eine Hardwarekomponente und führt die Endpunkt-zu-Endpunkt Verschlüsselung der Daten im *upstream* vom NT zur Vermittlungsstelle bzw. zum Übertragungsmedium 2, respektive die Entschlüsselung der Daten im *downstream* von der Vermittlungsstelle 17 bzw. dem Übertragungsmedium 2 zum NT bzw. zum Benutzeranschluß 5 durch. Dabei sind im gegenständlichen Konzept Blockchiffren und Stromchiffren auf die B-Kanal Daten anwendbar.

Der D-Kanal Monitor 7, Datenflußcontroller 8 und die Schlüsselaustauscheinheit 10 können als Hardware-Bauteile vorliegen oder in einem Prozessor in Software integriert sein. Dabei überwacht der D-Kanal Monitor 7 die Signalisierungsmeldungen in der *control plane* und erkennt damit den Aufbau eines B-Kanals. Es werden daraufhin die Teilnehmerauthentifizierung mit der Authentikationseinheit 9 und der Austausch von Zertifikaten und Schlüsseln und die Vereinbarung eines Sitzungsschlüssels zwischen dem die Verbindung aufbauenden bzw. rufenden Benutzeranschlusses 5 und dem angewählten bzw. angerufenen Benutzeranschluß 6 durchgeführt und die vereinbarten Sitzungsschlüssel in den Encryptor 11 des jeweiligen Benutzeranschlusses 5, 6 geladen. Der Datenflußcontroller 8 führt die Synchronisation der Verschlüsselungseinheit 1 durch und führt den vom Interceptor 12 extrahierten Klartextsdatenstrom der B-Kanäle im *upstream* (verschlüsselten Daten im *downstream*) dem Encryptor 11 zu und leitet nach erfolgter Verschlüsselung (Entschlüsselung) diese über den Interceptor 12 an die Vermittlungsstelle 17 bzw. an das Übertragungsmedium 2 oder an den Benutzer bzw. das Endgerät (TE1, TE2) weiter.

Die in diesem Abschnitt beschriebenen Einheiten sind nicht zwingend verschiedene Schaltungen, sondern können komponentenweise oder zu einer Komponente integriert sein, wie auch die Verschlüsselungseinheit 1 selbst als Teil der ISDN NT Komponenten, beispielsweise als Teil einer S/T Schnittstellenschaltung integriert sein kann.

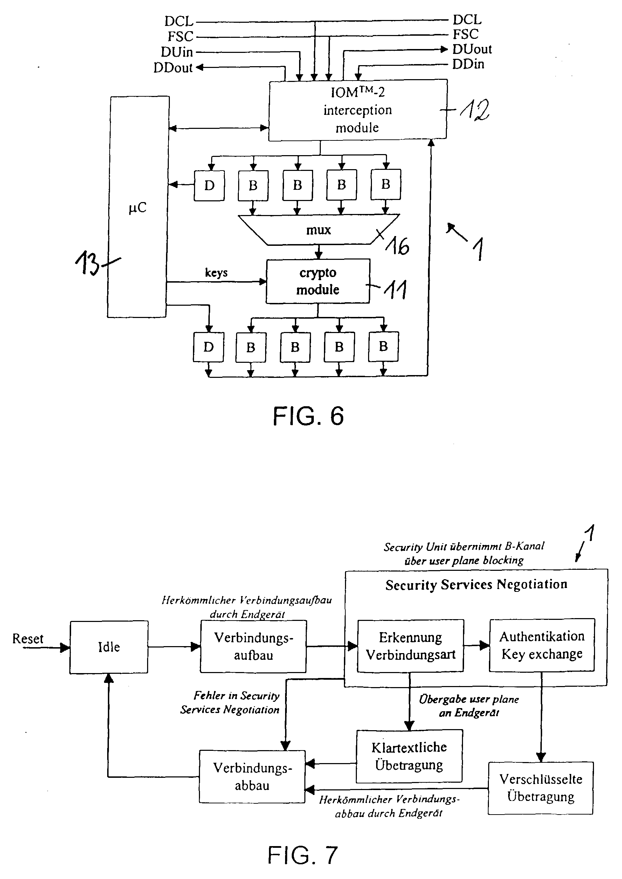

Eine vorteilhafte Ausführung einer NT Integration ist in Fig. 6 beschrieben. Ein Interceptor 12 ist an der IOM-Schnittstelle eines ISDN BA NT angeordnet. Die IOM-2 Schnittstelle stellt im wesentlichen zwei serielle Datenleitungen für den *upstream* (*data up,* DU) und *downstream* (*data down,* DD) zur Verfügung, wie auch Taktleitungen zur Synchronisation mit den 8 kHz B-/D-Kanal Rahmen (*frame synchronisation clock,* FSC) und der Daten selbst (*data clock,* DCL). Der IOM Interceptor 12 extrahiert die D-Kanal-Daten, sowie B₁ und B₂ Daten der beiden ISDN BA B-Kanäle sowohl aus *upstream* und *downstream* und führt diese über den Multiplexer 16 im Zeitmultiplex dem Encryptor 11 zu, wie in Fig. 5 dargestellt ist. Ein Mikrocontroller (µC) übernimmt die Funktionen des Datenflußcontrollers, der Einheit zur Teilnehmerauthentifizierung und der Einheit zum Schlüsselaustausch.

Das obig dargestellte Beispiel der IOM Interception ist aus Gründen der häufigen Verwendung dieser Schnittstelle in ISDN BA NTs gegeben, wobei sich das Konzept nicht auf diese Schnittstelle beschränkt, sondern als Beispiel der Extraktion von D-Kanal und B-Kanal-Daten aus den Übertragungsrahmen im NT anzusehen ist.

Der zeitliche Ablauf einer kryptographisch gesicherten ISDN Verbindung wird anhand eines in Fig. 7 dargestellten endlichen Automaten skizziert. Über den D-Kanal Monitor wird die von einem Endgerät bzw. Benutzeranschluß 5 initiierte oder von der Vermittlungsstelle 17 signalisierte Verbindungsaufbauphase erkannt. Die Verschlüsselungseinheit 1 (*Security Unit*) geht daraufhin in den Status der *security services negotiation* über, bestehend aus Erkennung des Kommunikationspartners samt Entscheidung hinsichtlich herkömmlicher klartextlicher oder kryptographisch gesicherter, vertraulicher Kommunikation, sowie in letztgenanntem Fall Teilnehmerauthentikation und Verhandeln der Sitzungsschlüssel. Daraufhin wird die Benutzerkommunikation klartextlich oder verschlüsselt durchgeführt, respektive die Verbindung bei Fehlern in der *security services negotiation* geschlossen. Der Verbindungsabbau ist wiederum vom Endgerät initiiert. Vorteilhafterweise ist vorgesehen, daß nach Blockierung des B-Kanals, insbesondere durch Datenaustausch zwischen
- der Verschlüsselungseinheit 1 des rufenden bzw. die Verbindung aufbauenden
- Benutzeranschlusses 5 und der Verschlüsselungseinheit 1' des angerufenen
- Benutzeranschlusses 6 ein Datenaustausch zur Authentikation der beiden
- Benutzeranschlüsse 5, 6 und gegebenenfalls zum Austausch der dem jeweiligen
- Benutzeranschluß 5, 6 eigenen Zertifikate und/oder öffentlichen Schlüssel erfolgt.
Vorzugsweise basierend auf den ausgetauschten Zertifikaten und/oder Schlüsseln wird
- ein Sitzungsschlüssel für die Übertragung der Benutzerdaten im B-Kanal festgelegt
- bzw. vereinbart und erst nach Erstellung des Sitzungsschlüssels wird die Blockierung des B-Kanals
- aufgehoben und mit dem Absenden der mit dem ausgehandelten Sitzungschlüssel
- verschlüsselten Benutzerdaten von den miteinander kommunizierenden
- Benutzeranschlüssen 5, 6 begonnen.

Der in Fig. 7 dargestellte endliche Automat bezieht sich auf einen einzelnen B-Kanal, im Falle mehrerer B-Kanäle ist für die Übertragung auf jedem der B-Kanäle jeweils ein eigener Sitzungsschlüssel auszuhandeln. Der für die *security services negotiation* erforderliche Kommunikationskanal wird *in band* über Blockieren des B-Kanals erstellt, wie im folgenden noch erklärt wird.

Für die Verhandlung der Verschlüsselungsparameter, wie auch für die Synchronisation der in eine Kommunikationsbeziehung involvierten Verschlüsselungseinheit 1 wird im B-Kanal ein transparenter, zeitsynchroner Kommunikationskanal erstellt.

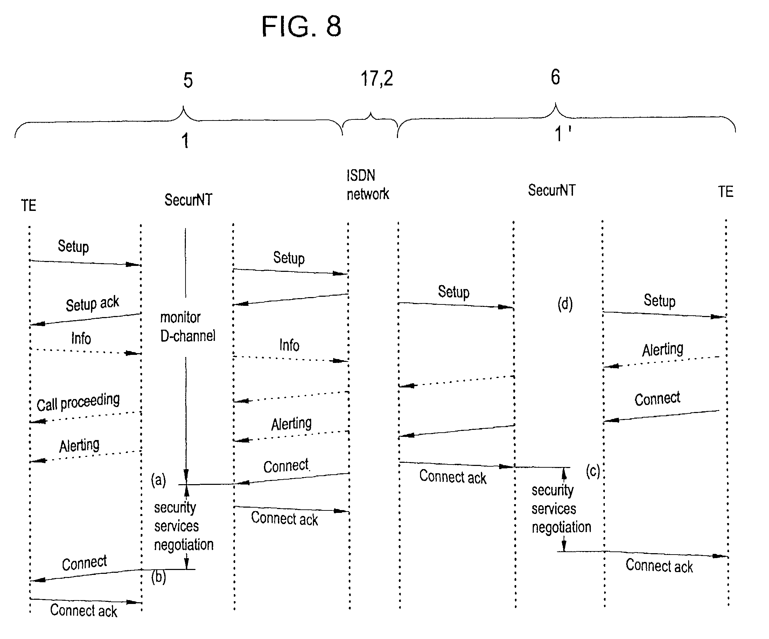

Dieses Szenario ist in Fig. 8 anhand der Q.931 Meldungen eines Verbindungsaufbaus am D-Kanal, gemäß ITU-T, ISDN *user network interface layer 3 specification for basic call control, Recommendation Q.931, International Telecommunication Union, Telecommunication Standardisation Sector,* 1998, dargestellt. Für die grundsätzliche Betrachtung des Blockierens sind nicht zwingende bzw. vorteilhafte Signalisierungsmeldungen strichliert ausgeführt. Dabei ist linker Hand der aktive Verbindungsaufbau des initiierenden Endgerätes bzw. Benutzeranschlusses 5 dargestellt, rechter Hand der äquivalente Ablauf des den Ruf annehmenden Endgerätes bzw. Benutzeranschlusses 6.

In der aktiv rufenden Station 5 werden die Signalisierungsmeldungen durch die im NT integrierte Verschlüsselungseinheit 1 (SecurNT) ohne Veränderungen weitergeleitet, bis die Vermittlungsstelle 17 das Schalten des B-Kanals über die Meldung *Connect* signalisiert bzw. über das Übertragungsmedium 2 ein entsprechendes Signal einlangt. Zu diesem in Fig. 8 als (a) bezeichneten Zeitpunkt schließt die Verschlüsselungseinheit 1 (SecurNT) den Verbindungsaufbau zum ISDN Netzwerk bzw. zum Übertragungsmedium 2 bzw. zur Verbindungsstelle 17 aktiv ab, ohne dies jedoch an das die Verbindung initiierende Teilnehmerendgerät 5 (TE) zu melden. Dies führt zu einer Situation, in der der B-Kanal zwischen der Verschlüsselungseinheit 1 und der Verschlüsselungseinheit 1' der kommunizierenden Benutzeranschlüsse 5, 6 geschaltet ist, die *user plane* der Endgeräte bzw. der Benutzeranschlüsse 5, 6 aber vorübergehend blockiert ist, da der Abschluß des Verbindungsaufbaus den Endgeräten 5, 6 vorenthalten ist. Der B-Kanal kann somit von den beiden Verschlüsselungseinheiten 1,1' für Schlüssel- und Zertifikataustausch und Authentikation verwendet werden. Nach deren Abschluß, als (b) in Fig. 8 dargestellt, wird die *user plane* an den Benutzeranschluß 5 durch Weiterleiten der zuvor in (a) unterdrückten, abschließenden *Connect* Meldung übergeben. Die folgende Meldung *Connect ack* wird von der Vermittlungseinheit 1 unterdrückt.

Für den den Ruf annehmenden Benutzeranschluß 6 gelten äquivalente Überlegungen, wobei aus der sequentiellen Abfolge heraus das Initiieren des Blockierens unterschiedlich erfolgen kann. Zu dem als (c) bezeichnetem Zeitpunkt wird das abschließende *Connect ack* seitens der Vermittlungsstelle 17 dem Endgerät 6 bis zum Abschluß der *security services negotiation,* in der der B-Kanal dieser *negotiation* exklusiv zugeordnet bzw. dafür freigehalten ist, vorenthalten. Alternativ ist mit (d) ein Zeitpunkt angegeben, zu dem das Schalten des B-Kanals bereits früher erfolgen kann. In diesem Fall würde die Meldung *Setup* dem Endgerät 6 vorenthalten und Verschlüsselungseinheit 1' generiert aktiv die Signalisierungmeldung *Connect* respektive die Rufanzeige *Alerting* und übermittelt diese an den Benutzeranschluß 5. Nach Abschluß der *security services negotiation* wird eine *Setup* Meldung an das Endgerät 6 geleitet beziehungsweise das von diesem Endgerät 6 generierte *Connect,* das zur Vermittlungsstelle abgegeben wird, unterdrückt, da der B-Kanal bereits geschaltet ist. Letztgenannte Möglichkeit ist in Fig. 8 der Übersicht halber nicht explizit ausgeführt, zumal die prozedurale Eigenschaft der exklusiven Zuordnung des B-Kanals äquivalent ist. Auch sind Möglichkeiten des aktiven Generierens oder Verzögerns für diese prozedurale Eigenschaft nicht relevanter Signalisierungsmeldungen nicht ausgeführt, da einzig die exklusive Zuordnung des B-Kanals bzw. sein Blockieren und Freihalten für den Schlüsseltausch und die Authentifizierungsvorgänge zwingend ist.

Vorteilhaft kann es sein, wenn bei Blockieren des B-Kanals vor dem Durchschalten des B-Kanales die von der Vermittlungsstelle 17 generierten, den Verbindungsaufbau betreffenden Signale simuliert und dem Benutzer dargestellt werden. Es kann vorgesehen sein, daß der B-Kanal des angerufenen Benutzeranschlusses 6 entweder beginnend mit dem Zeitpunkt des Eintreffens eines einen Verbindungsaufbau signalisierenden Datensatzes (*Setup*) oder beginnend mit dem Zeitpunkt des Durchschaltens des B-Kanals oder eines seitens des die Verbindung aufbauenden Benutzeranschlusses 5 gesendeten und die aufgebaute Verbindung bestätigenden Datensatzes (*Connect ack*) durch die Verschlüsselungseinheit 1' des angewählten Benutzeranschlusses 6 blockiert und erst nach Erstellung bzw. Festlegung eines Sitzungsschlüssels zur Übermittlung von verschlüsselten Benutzerdaten freigegeben wird. Zweckmäßigerweise kann derart vorgegangen werden, daß für die Zeitdauer der Blockierung des B-Kanals die Übertragung von Signalisierungsdaten auf dem D-Kanal unterbrochen wird und am D-Kanal bei der Verschlüsselungseinheit 1 einlangende Signalisierungs- und Verbindungsdaten erst nach der Freigabe des B-Kanales weitergeleitet werden oder von der Verschlüsselungseinheit 1 erstellte äquivalente Signalisierungs- und Verbindungsdaten an den jeweiligen Benutzeranschluß 5, 6 weitergeleitet werden.

Die erfindungsgemäße Vorgangsweise gewährleistet einen transparenten, zeitsynchronen Kommunikationskanal in der *user plane* (B-Kanäle), in dem sicherheitsrelevante Parameter wie symmetrische Sitzungsschlüssel für die Sicherung der Benutzerdaten im B-Kanal, Authentifikation oder initiale Synchronisation der Verschlüsselungskomponente auf die Blockgröße des Algorithmus einbindbar sind. Das Konzept ist dabei von den dabei verwendeten Algorithmen und Verfahren wie Diffie Hellman oder Rivest, Shamir, Adleman (RSA) unabhängig, es wird aber unten ein Beispiel zur Veranschaulichung angegeben.

Aus Gründen der Robustheit sind asymmetrische Verfahren des Schlüsselaustauschs (z.B. Diffie Hellman) mit auf Zertifikaten (z.B. X.509) basierenden Verfahren der Authentikation und Verteilung öffentlicher Schlüssel vorteilhaft. Diese basieren auf Schlüsselpaaren, einem privaten Schlüssel, der geheim zu halten ist, und einem öffentlichen Schlüssel, der allgemein bekannt sein kann. Unter dem privaten Schlüssel codierte Informationen sind nur unter dem öffentlichen Schlüssel zu verifizieren (z.B. Authentikation oder Zertifizierung), respektive unter dem öffentlichen Teil verschlüsselte Information sind nur unter dem privaten Schlüssel zu entschlüsseln sind (z.B. Verhandeln von Sitzungsschlüsseln). Dabei wird für jede Verschlüsselungseinheit eines Benutzeranschlusses ein derartiges Schlüsselpaar generiert, wobei die jeweilige Verschlüsselungseinheit damit instanziert und der private Schlüssel in dieser nicht zugänglich gehalten bzw. eingegeben wird.

Nachdem derartige Vorgangsweisen per se bekannt sind, wird hier nur der prinzipielle Ablauf zur Verdeutlichung skizziert, wobei dieser Ablauf in der gegebenen Form und Sequenz auch nicht zwingend ist. Zu Beginn der Verhandlungsphase werden die von einer Zertifizierungsinstanz signierten, öffentlichen Schlüssel zwischen den Verschlüsselungseinheiten 1, 1' der beteiligten Endgeräte bzw. Benutzeranschlüsse 5, 6 ausgetauscht und mit dem bekannten öffentlichen Schlüssel der Zertifizierungsstelle verifiziert. Die Authentizität der jeweiligen Verschlüsselungseinheiten basiert im wesentlichen auf dem Verschlüsseln von beiden Kommunikationspartnern 5, 6 bekannten Informationen unter dem privaten Schlüssel, was unter der öffentlichen Schlüsselkomponente verifizierbar ist, wohingegen der eigentliche Austausch der meist mit Zufallskomponenten generierten Sitzungsschlüssel unter Verschlüsseln von dessen Komponenten unter dem öffentlichen Schlüssel des Kommunikationspartners erfolgt.

Wesentlich ist dabei, daß für jede Kommunikationsbeziehung ein eigener Sitzungsschlüssel vor Beginn der eigentlichen Kommunikation generiert und in den Encryptor 11 geladen wird. Bei mehreren gleichzeitigen Kommunikationsbeziehungen (z.B. beide B-Kanäle eines ISDN BA) wird auch jedem B-Kanal ein eigener für diese Kommunikationsbeziehung gültiger Sitzungsschlüssel zugeordnet.

Die dargestellte Vorgangsweise ist in den verwendeten Verschlüsselungsalgorithmen nicht beschränkt. Es ist vielmehr jede Form von Blockchiffren oder Stromchiffren auf die B-Kanal Daten anwendbar, die keine Datenexpansion durchführt, daß heißt Datenblöcke in solche gleicher Größe überführt und somit die synchrone Charakteristik der B-Kanäle beibehält. Die Synchronisierung der Verschlüsselungseinheiten kann implizit über Rahmenkennungsmuster, die den Abschluß des Blockierens des B-Kanals initiieren, erfolgen.

Bei der Ablaufsteuerung gemäß Fig. 7 und 8 können in Phasen, in denen ein B-Kanal seitens des ISDN Netzes nicht geschaltet ist, die übermittelten B-Kanal Daten transparent sowohl im *upstream,* als auch im *downstream* weitergeleitet werden. Auch können von der Verschlüsselungseinheit aktiv B-Kanal Bitmuster generiert werden. Der D-Kanal ist durchlässig und wird von der Verschlüsselungseinheit überwacht.

In der gezeigten, vom Endgerät bzw. Benutzeranschluß unabhängigen Lösung erfolgt das Initiieren einer Kommunikationsbeziehung, wie in ISDN üblich, über die Anwahl des Kommunikationspartners; es ergeben sich in dieser Phase keine Änderungen dieser initialen Phase, und es wird auch die initiierende Signalisierungsmeldung durch das Endgerät, beispielsweise ein ISDN Telefon Typus TE1, generiert oder bei analogen TE2 Geräten durch den Terminaladapter TA.

Die D-Kanal Signalisierungsmeldungen in der Verbindungsaufbauphase werden von der Verschlüsselungseinheit 1 überwacht und in *upstream* und *downstream* weitergeleitet, solange der sich auf die Anwahl beziehende B-Kanal zwischen den Kommunikationspartnern nicht geschaltet ist. Dies ist für den eine Verbindung aktiv aufbauenden Benutzeranschluß 5 zwingend, wobei die grundlegende prozedurale Eigenschaft des Verbindungsaufbaus nicht beeinflussende Modifikationen oder zeitliche Verzögerungen über Pufferung zulässig sind.

An der den Ruf annehmenden Seite bzw. bei dem gewählten Benutzeranschluß 6 könnten vorteilhafterweise zur Verhandlung von Parametern auch aktiv Signalisierungsmeldungen generiert bzw. unterdrückt werden, wenn der B-Kanal noch nicht geschaltet ist (vgl. Diskussion Fall d) in Fig. 8.

Eine vorteilhafte Möglichkeit für die Signalisierungsphase ist das Treffen der Entscheidung, ob die der Signalisierungsphase folgende Datenübertragung im B-Kanal zu verschlüsseln ist, oder ob eine klartextliche Kommunikation, z.B. ins herkömmliche Festnetz, erfolgen soll. Dabei ist das Unterstützen von unverschlüsselter Kommunikation nicht zwingend, sondern hängt von der dem Anwendungsfall entsprechenden *Security Policy* ab.

Die Entscheidung zwischen Kommunikation zwischen den Verschlüsselungseinheiten 1, 1' oder herkömmlichen Festnetzverbindungen ist in verschiedener Ausprägung durchführbar. Beispiele sind über in Verschlüsselungseinheiten gehaltene Rufnummernlisten eindeutige Zuordnung verschlüsselter Kommunikation zu einer oder mehreren Mehrfachrufnummern. Diese Daten könnten aber auch als *label based identification* von der Vermittlungsstelle explizit signalisiert oder über Benutzer-Benutzer Signalisierung in die Signalisierungsphase von der jeweiligen Verschlüsselungseinheit mitgeteilt werden.

Der Zeitpunkt der Rufanzeige, zum Beispiel das Läuten eines Telefons, beeinflußt den grundsätzlichen Ablauf nicht. So kann die korrespondierende *Alerting* Meldung sowohl ohne Verzögerung weitergeleitet werden und dem Benutzer den Ruf anzeigen, bevor Sicherheitsparameter ausgehandelt sind, als auch diese durch die Verschlüsselungseinheit unterdrückt und nach erfolgter Parameterverhandlung verzögert neu generiert werden.

Im Falle einer Datenübertragung in verschlüsselter Form ist bei Blockierung des B-Kanals zwingend, daß von der Verschlüsselungseinheit 1 keine Endgerätedaten klartextlich im B-Kanal an die Vermittlungsstelle 17 übertragen werden. Dies bedeutet, daß der B-Kanal unmittelbar mit dessen Schalten seitens der Vermittlungsstelle 17 exklusiv der Verschlüsselungseinheit 1 zugeordnet wird. Dies resultiert in einem transparenten und synchronen Kommunikationskanal für die kommunizierenden Verschlüsselungseinheiten 1, 1' für den Austausch öffentlicher Schlüsselkomponenten und Zertifikaten, Authentikation, Verhandlung des Verschlüsselungsverfahrens (z.B. DES oder TripleDES bzw. deren Operationsmodi und Initialvektoren) oder zur Verhandlung symmetrischer Sitzungsschlüssel für die nachfolgende Kommunikationsphase. Dabei kann für jede Verbindung ein eigener Sitzungsschlüssel verhandelt werden, entsprechend einer anwendungsspezifischen *Security Policy* aber auch klartextliche Kommunkation beispielsweise für bestimmte Dienstekennungen gefordert werden.

Eine vorteilhafte Vorgangsweise in dieser Phase ist die Synchronisation der Verschlüsselungseinheiten 1, 1', die die Sicherung bzw. Verschlüsselung der Benutzerdaten durchführen. Das heißt, daß die Übergabe des B-Kanals an das Endgerät des einen Benutzeranschlusses 5 dem Kommunikationspartner, d.h. der Verschlüsselungseinheit 1' des anderen Kommunikationspartners bzw. des Benutzeranschlusses 6 dergestalt zu signalisieren ist, daß dieser das erste im B-Kanal verschlüsselte Byte als solches erkennt bzw. erkennen kann. Dieses kann zum Beispiel über im B-Kanal vorangestellte Rahmensynchrisationsmuster erfolgen. Dazu ist es vorteilhaft, wenn die Verschlüsselungseinheit 1 einen Datenfluß-Controller 8 zur Synchronisation der kommunizierenden Benutzeranschlüsse 5, 6 für die Übertragung der verschlüsselten Benutzerdaten aufweist, der nach Festlegung eines Sitzungsschlüssels Rahmenkennungsmuster generiert und eintreffende Rahmenkennungsmuster erkennt.

Bis zum Beenden einer Verbindung werden alle im B-Kanal übertragenen Benutzerdaten entsprechend dem verhandelten Securitykontext entweder durch die Verschlüsselungseinheiten verschlüsselt oder im Falle von klartextlicher Kommunikation unmodifiziert weitergeleitet.

Der Verbindungsabbau erfolgt entweder durch eines der kommunizierenden Endgeräte 5, 6 in der im ISDN üblichen Art und Weise, wobei die korrespondierenden Signalisierungsmeldungen durch die jeweilige Verschlüsselungseinheit 1, 1' weitergeleitet werden, oder der Verbindungsabbau wird explizit von einer der Verschlüsselungseinheiten 1, 1' initiiert, wenn im Verlauf der Signalisierungs- oder Parameterverhandlungsphase Verletzungen der *Security Policy* oder Fehler, die sichere Kommunikation verhindern, erkannt werden.

Schließlich kann vorgesehen sein, daß einem anrufenden oder angerufenen Benutzer spätestens ab dem Zeitpunkt des Blockierens des B-Kanales von der Verschlüsselungseinheit 1, 1' ein Signal, z.B. ein Pfeifen oder eine optische Anzeige, dargeboten wird.

Als Übertragungsmedium 2 können elektrische Leitungen, Lichtleiter, Funkstrecken usw., fungieren. Die Vermittlungsstelle 17 ist vorteilhafterweise eine übliche ISDN-Vermittlungsstelle.

## Patentansprüche

1. Anordnung zur verschlüsselten Kommunikation zwischen Benutzeranschlüssen (5, 6), nämlich ISDN-*network terminators* (ISDN NT), in ISDN-Netzen, wobei die von dem übertragenden Teilnehmergerät bzw. Benutzeranschluß (5), insbesondere einem ISDN-Basisanschluß (ISDN BA) oder ISDN-Primärratenanschluß (ISDN PRA), mit einer in den zumindest einen B-Kanal und zumindest einen D-Kanal umfassenden Übertragungspfad der Benutzerdaten eingeschalteten Verschlüsselungseinheit (1) verschlüsselt und verschlüsselt an die Vermittlungsstelle (17) oder in das Übertragungsmedium (2), insbesondere Teilnehmeranschlußleitung, aufgegeben und vom Übertragungsmedium (2) bzw. von der Vermittlungseinheit eintreffende Daten entschlüsselt werden, dadurch gekennzeichnet, daß die Verschlüsselungseinheit (1) zwischen der *S/T-interface*-Komponente (3) und der *U-transceiver*-Komponente (4) des jeweiligen Benutzeranschlusses (5, 6) implementiert ist bzw. zwischen die Schnittstellen, insbesondere IOM-Schnittstellen, der *S/T-interface*-Komponente (3) und der *U-transceiver*-Komponente (4) eingeschaltet ist.

2. Anordnung nach Anspruch 1, dadurch gekennzeichnet, daß alle Benutzerdaten des B-Kanales und gegebenenfalls auch die, insbesondere Signalisierungs- und Verbindungsdaten umfassenden, Daten des D-Kanales über die Verschlüsselungseinheit (1) geführt sind und zumindest alle über den B-Kanal übertragenen Benutzerdaten verschlüsselt übertragbar sind.

3. Anordnung nach Anspruch 1 oder 2, dadurch gekennzeichnet, daß die Verschlüsselungseinheit (1) einen den Verbindungsaufbau des Benutzeranschlusses (5) zu einem anderen Benutzeranschluß (6) überwachenden D-Kanal-Monitor (7) aufweist, der den D-Kanal bezüglich Signalisierungsmeldungen überwacht und mit dem die Übertragung von Benutzerdaten auf dem B-Kanal, insbesondere durch Ansteuerung eines Datenflußkontrollers (8), blockierbar oder freigebbar ist.

4. Anordnung nach einem der Ansprüche 1 bis 3, dadurch gekennzeichnet, daß die Verschlüsselungseinheit (1) einen Datenfluß-Controller (8) zur Synchronisation der kommunizierenden Benutzeranschlüsse (5, 6) für die Übertragung der verschlüsselten Benutzerdaten aufweist, der nach Festlegung eines Sitzungsschlüssels Rahmenkennungsmuster generiert, die insbesondere vor der Übertragung der verschlüsselten Benutzerdaten abgesendet werden, und eintreffende Rahmenkennungsmuster gegebenenfalls erkennt.

5. Anordnung nach einem der Ansprüche 1 bis 4, dadurch gekennzeichnet, daß die Verschlüsselungseinheit (1) eine Einheit zum Schlüsseltausch (10) und/oder eine Einheit zur Authentikation (9) umfaßt, mit welchen Einheiten zwischen kommunizierenden Benutzeranschlüssen (5, 6) Zertifikate und/oder vorgegebene oder wählbare Schlüssel bzw. Authentikationsdaten austauschbar sind und ein Sitzungsschlüssel festlegbar ist.

6. Anordnung nach einem der Ansprüche 1 bis 5, dadurch gekennzeichnet, daß die Verschlüsselungseinheit (1) einen Interceptor (12), z.B. ein FPGA (*field programmable gate array*), aufweist, an den der D-Kanal-Monitor (7), der Datenfluß-Controller (8) sowie die Einheit (10) zum Schlüsseltausch und die Einheit (9) zur Authentikation angeschlossen ist, wobei der Interceptor (12) zwischen die *S/T-interface*-Komponente (3) und die *U-transceiver*-Komponente (4) geschaltet ist.

7. Anordnung nach einem der Ansprüche 1 bis 6, dadurch gekennzeichnet, daß in der Verschlüsselungseinheit (1) ein Encryptor (11) vorgesehen ist, der in Datenübertragungsverbindung mit dem Datenfluß-Controller (8) und der Einheit zum Schlüsseltausch (10) und/oder mit der Einheit (9) zur Authentikation steht, wobei die Verschlüsselungseinheit (1), insbesondere der Encryptor (11), einen Speicher für einen zwischen den kommunizierenden Benutzeranschlüssen (5, 6) für die jeweilige Datenübertragung vereinbarten Sitzungsschlüssel aufweist.

8. Anordnung nach einem der Ansprüche 1 bis 7, dadurch gekennzeichnet, daß der Datenfluß-Kontroller (8) und gegebenenfalls der D-Kanal-Monitor (7) und vorzugsweise auch die Einheit (10) zum Schlüsseltausch bzw. die Einheit (9) zur Authentikation und gegebenenfalls der Encryptor (11) in Form eines Prozessors (13), insbesondere in Form eines gemeinsamen Prozessors, ausgebildet sind.

9. Verfahren zur Übertragung von verschlüsselten Benutzerdaten in ISDN-Netzen, wobei die von einem rufenden bzw. übertragenden Benutzeranschluß (5), nämlich ISDN-*network terminator* (ISDN NT), vorzugsweise einem ISDN-Basisanschluß (ISDN BA) oder ISDN-Primärratenanschluß (ISDN PRA), generierten Benutzerdaten mit einer in den Übertragungspfad der Benutzerdaten eingeschalteten Verschlüsselungseinheit (1) verschlüsselt und verschlüsselt an eine Vermittlungseinheit (17) bzw. in das Übertragungsmedium (2), insbesondere eine Teilnehmeranschlußleitung, aufgegeben werden bzw. die von einem angerufenen bzw. sendenden Benutzeranschluß (6) über das Übertragungsmedium (2) bzw. von der Vermittlungseinheit (17) einlangenden Benutzerdaten mit der Verschlüsselungseinheit (1) entschlüsselt und entschlüsselt weitergegeben werden, insbesondere mit einer Anordnung nach einem der Ansprüche 1 bis 8, dadurch gekennzeichnet, daß die Benutzerdaten in einer Verschlüsselungseinheit (1) verschlüsselt werden, die den Übertragungspfad bzw. die Schnittstelle, insbesondere IOM-Schnittstelle, zwischen der *S/T-interface*-Komponente (3) und der *U-transceiver*-Komponente (4) des jeweiligen Benutzeranschlusses (5, 6) überbrückt.

10. Verfahren nach Anspruch 9, dadurch gekennzeichnet, daß die Benutzerdaten des B-Kanales und gegebenenfalls auch die insbesondere Signalisierungs- und Verbindungsdaten umfassenden Daten des D-Kanales des Übertragungspfades über die Verschlüsselungseinheit (1) geführt sind und verschlüsselt werden.

11. Verfahren nach Anspruch 9 oder 10, dadurch gekennzeichnet, daß die einen Verbindungsaufbau von einem rufenden Benutzeranschluß (5) zu einem angerufenen Benutzeranschluß (6) einleitenden und im D-Kanal übertragenen Daten mit der Verschlüsselungseinheit (1), insbesondere mit einem D-Kanal-Monitor (7), überwacht bzw. detektiert werden.

12. Verfahren nach einem der Ansprüche 9 bis 11, dadurch gekennzeichnet, daß vor einer Übertragung von Benutzerdaten im B-Kanal der B-Kanal blockiert und von den Verschlüsselungseinheiten (1, 1') kommunizierender Benutzeranschlüsse (5, 6) zur Übertragung von Daten zum Festlegen eines Sitzungsschlüssels verwendet wird.

13. Verfahren nach einem der Ansprüche 9 bis 12, dadurch gekennzeichnet,
- daß nach Feststellung von einen Anruf einleitenden Daten (*Setup*) auf dem D-Kanal oder nach einer Rückmeldung des angerufenen Benutzeranschlusses (6), insbesondere einer Bestätigung eines durchgeschalteten B-Kanales, die Übertragung bzw. das Absenden von Benutzerdaten auf dem B-Kanal des die Verbindung aufbauenden bzw. rufenden Benutzeranschlusses (5) blockiert wird.

14. Verfahren nach einem der Ansprüche 9 bis 13, dadurch gekennzeichnet,
- daß nach Blockierung des B-Kanals, insbesondere durch Datenaustausch zwischen der Verschlüsselungseinheit (1) des rufenden bzw. die Verbindung aufbauenden Benutzeranschlusses (5) und der Verschlüsselungseinheit (1') des angerufenen Benutzeranschlusses (6), ein Datenaustausch zur Authentikation der beiden Benutzeranschlüsse (5, 6) und gegebenenfalls zum Austausch der dem jeweiligen Benutzeranschluß (5, 6) eigenen Zertifikate und/oder öffentlichen Schlüssel erfolgt,
- daß, vorzugsweise basierend auf den ausgetauschten Zertifikaten und/oder Schlüsseln, ein Sitzungsschlüssel für die Übertragung der Benutzerdaten im B-Kanal festgelegt bzw. vereinbart wird, und
- daß erst nach Erstellung des Sitzungsschlüssels die Blockierung des B-Kanals aufgehoben und mit dem Absenden der mit dem ausgehandelten Sitzungschlüssel verschlüsselten Benutzerdaten von den miteinander kommunizierenden Benutzeranschlüssen (5, 6) begonnen wird.

15. Verfahren nach einem der Ansprüche 9 bis 14, dadurch gekennzeichnet, daß nach Blockieren des B-Kanals und vor dem Durchschalten des B-Kanales die von der Vermittlungsstelle (17) generierten, den Verbindungsaufbau betreffenden Signale simuliert und die simulierten Signale dem Benutzer dargestellt werden.

16. Verfahren nach einem der Ansprüche 9 bis 15, dadurch gekennzeichnet, daß der B-Kanal des angerufenen Benutzeranschlusses (6) entweder beginnend mit dem Zeitpunkt des Eintreffens eines einen Verbindungsaufbau signalisierenden Datensatzes (*Setup*) oder beginnend mit dem Zeitpunkt des Durchschaltens des B-Kanals oder eines seitens des die Verbindung aufbauenden Benutzeranschlusses (5) die aufgebaute Verbindung bestätigenden Datensatzes (*Connect ack*) durch die Verschlüsselungseinheit (1') des angewählten Benutzeranschlusses (6) blockiert und erst nach Erstellung bzw. Festlegung eines Sitzungsschlüssels zur Übermittlung von verschlüsselten Benutzerdaten freigegeben wird.

17. Verfahren nach einem der Ansprüche 9 bis 16, dadurch gekennzeichnet, daß für die Zeitdauer der Blockierung des B-Kanals die Übertragung von Signalisierungsdaten auf dem D-Kanal unterbrochen wird und daß am D-Kanal bei der Verschlüsselungseinheit (1) einlangende Signalisierungs- und Verbindungsdaten erst nach der Freigabe des B-Kanales weitergeleitet werden oder von der Verschlüsselungseinheit (1) erstellte äquivalente Signalisierungs- und Verbindungsdaten an den jeweiligen Benutzeranschluß (5, 6) weitergeleitet werden.

18. Verfahren nach einem der Ansprüche 9 bis 17, dadurch gekennzeichnet, daß asymmetrische Verfahren des Schlüsseltausches, z.B. Diffie Hellmann, mit auf Zertifikaten, z.B. X.509, basierenden Verfahren der Authentikation und Verteilung öffentlicher Schlüssel eingesetzt werden.

19. Verfahren nach einem der Ansprüche 9 bis 18, dadurch gekennzeichnet, daß der für die jeweilige Übertragung der Benutzerdaten ermittelte bzw. vereinbarte Sitzungsschlüssel in dem Encryptor (11) der Verschlüsselungseinheit (1) der Benutzeranschlüsse (5, 6) gespeichert und für die gesamte Zeitdauer der Übertragung der Benutzerdaten für die Verschlüsselung der Benutzerdaten unverändert eingesetzt und gegebenenfalls nach Beendigung der Datenübertragung gelöscht wird.

20. Verfahren nach einem der Ansprüche 9 bis 19, dadurch gekennzeichnet, daß bei einer gleichzeitigen Übertragung von Benutzerdaten auf mehreren B-Kanälen eines Benutzeranschlusses (5, 6) für die Übertragung auf jedem dieser Kanäle ein eigener gültiger Sitzungsschlüssel ermittelt und für die Verschlüsselung der Benutzerdaten eingesetzt wird.

21. Verfahren nach einem der Ansprüche 9 bis 20, dadurch gekennzeichnet, daß Verschlüsselungsalgorithmen eingesetzt werden, die eine Datenexpansion vermeiden und die synchrone Charakteristik der B-Kanäle unverändert beibehalten.

22. Verfahren nach einem der Ansprüche 9 bis 21, dadurch gekennzeichnet, daß die kommunizierenden Benutzeranschlüsse (5, 6), insbesondere die Verschlüsselungseinheiten (1, 1'), mittels Rahmenkennungsmuster, die den Abschluß des Blockierens des B-Kanals initiieren bzw. mitteilen und insbesondere dem Übertragungsbeginn verschlüsselter Benutzerdaten vorangehen, synchronisiert werden.

23. Verfahren nach einem der Ansprüche 9 bis 22, dadurch gekennzeichnet, daß einem anrufenden oder angerufenen Benutzer spätestens ab dem Zeitpunkt des Blockierens des B-Kanales von der Verschlüsselungseinheit (1, 1') ein Signal, z.B. ein Pfeifen oder eine optische Anzeige, dargeboten wird.
